Europäisches Patentamt

European Patent Office

Office européen des brevets

(11) Publication number: **0 177 001**
**A2**

# EUROPEAN PATENT APPLICATION

(21) Application number: **85112362.0**

(22) Date of filing: **30.09.85**

(51) Int. Cl.⁴: **F 16 H 57/02**
**F 16 H 1/16**

(30) Priority: **05.10.84 IT 2345684 U**

(43) Date of publication of application:
**09.04.86 Bulletin 86/15**

(84) Designated Contracting States:
**AT BE CH DE FR GB LI LU NL SE**

(71) Applicant: **SIAT - Società Internazionale Applicazioni Techniche S.p.A.**
**Via G. Puecher, 22**
**I-22078 Turate (Como)(IT)**

(72) Inventor: **Lissoni, Adelio**
**Via Barlassina**
**I-21040 Vedano Olona, Varese(IT)**

(74) Representative: **Faggioni, Giovanmaria, Dr. et al,**
**Fumero-Studio Consulenza Brevetti Widenmayerstrasse 4/I**
**D-8000 München 22(DE)**

(54) Gearbox for a geared motor unit, in two parts produced by casting.

(57) A gearbox for a geared motor unit - of the type comprising a worm and gearwheel, the work being fixed to the input shaft and the gearwheel being fixed to the output shaft, this latter being disposed perpendicular to the input shaft is constructed in only two parts, separable along a separation plane passing through the axis of one of said shafts and perpendicular to the axis of the other shaft. The two opposing faces of said gearbox parts, which are parallel to said separation plane, incorporate seats for housing the rolling bearings of the second shaft, whereas two further opposing faces, perpendicular to the separation plane, comprise seats for housing the bearings of the first shaft and opening along the separation line.

EP 0 177 001 A2

./...

Croydon Printing Company Ltd.

M

15

10

Z

14a  8a  9a  9  3a  8b  14b

3  2b

2

1b  4  y

1

7  2a

y  12  y

5  11b  2c

1a  x

13  1c  Z

"GEARBOX FOR A GEARED MOTOR UNIT, IN TWO PARTS PRODUCED BY CASTING"

==°O°==

Widespread use is made of geared motor units in mechanical construction. Normally, a geared motor unit comprises a gearbox, with an input shaft and an output shaft, the motion being transmitted from the first shaft to the second with a reduction ratio determined by the gears meshing in the box.

One of the simplest geared motor units comprises a worm and gearwheel within the gearbox, the worm being fixed to the input shaft and the gearwheel being fixed to the output shaft, the two shafts having their respective axes perpendicular.

A considerable part of the cost of this type of geared motor – which in itself is fairly simple – is represented by the gearbox and the relative assembly. In fact, such a box normally comprises a substantially parallelepiped main body, with two first coaxial apertures in correspondence of two opposing faces, and two second equally coaxial apertures in correspondence of two faces perpendicular to the first ones.

For assembly, the shaft carrying the worm is firstly inserted through the first apertures. These are then closed by corresponding sealing covers, each of which incorporates a rolling bearing for a corresponding end of said shaft carrying the worm.

When the first shaft has been mounted and locked in position in the aforesaid manner, the second shaft carrying the gearwheel is inserted through the second apertures. These are then also closed – one after the other and after being careful to correctly engage the gearwheel with the worm – by sealing covers, which also incorporate rolling bearings for the ends of said shaft carrying the gearwheel.

Generally, one of the covers incorporating a bearing for the shaft carrying the worm – i.e. for the input shaft – carries

- 2 -

0177001

connection means, for example a connection flange, for the motor unit which drives the input shaft.

It is apparent that this known construction comprises at least five main parts - i.e. the body of the box and the four mentioned covers - the assembly of which involves considerable attention and time, and thus high cost.

The object of the present invention is to provide a gearbox for a geared motor unit of the general type heretofore described, which is of simple construction and assembly and thus of low cost.

This is attained essentially in that said box is constructed in only two parts produced by casting, which are separable along a separation plane passing through the axis of one of said shafts and perpendicular to the axis of the other shaft, and in that the two opposing faces of said parts, which are parallel to said separation plane, incorporate seats for housing the rolling bearings of the second shaft, whereas two further opposing faces, perpendicular to the separation plane, comprise seats for housing the bearings of the first shaft and opening along the separation line.

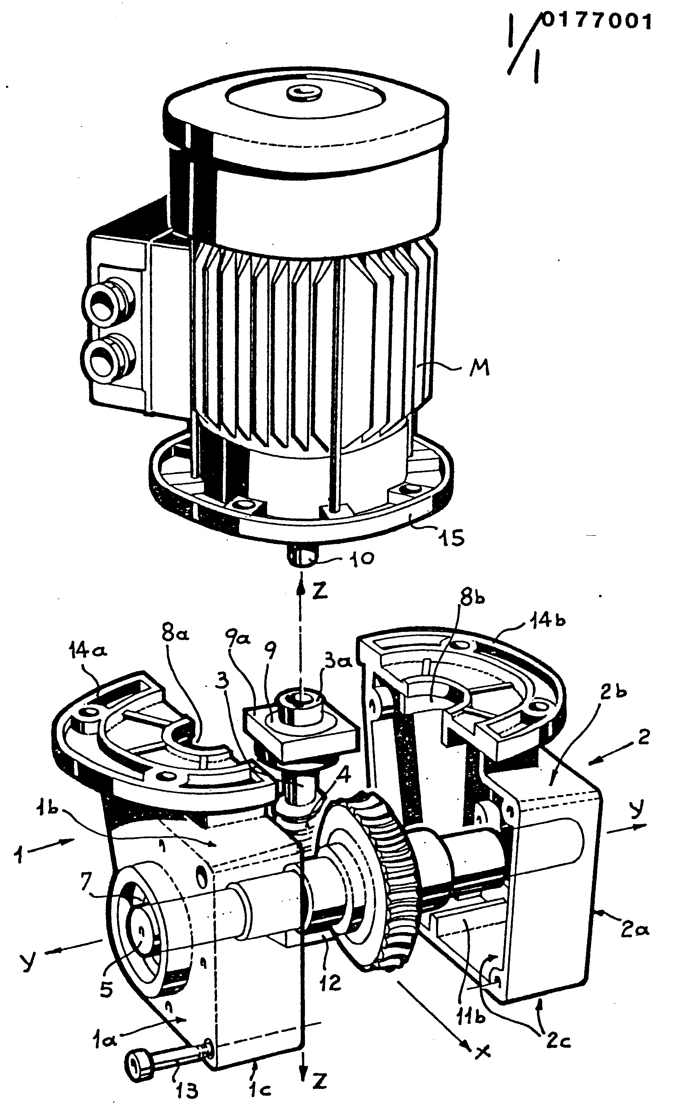

Further characteristics and advantages of the geared motor box according to the invention will be more apparent from the description given hereinafter of a preferred embodiment thereof, illustrated by way of example on the accompanying drawing, in which said box is shown in a diagrammatic exploded perspective view.

As can be seen, the geared motor box according to the invention is formed from two substantially symmetrical parts 1 and 2, separable along a separation plane Z-X, which passes through the vertical axis Z-Z of the input shaft 3 carrying the worm 4 and is perpendicular to the axis Y-Y of the output shaft 5 which is fixed to the gearwheel 6.

The two parts 1 and 2 are substantially specularly symmetrical in respect of the separation plane Z-X. Each of them comprises a main face 1a or 2a parallel to the separation plane Z-X and incorporating, preferably as a casting insert, a bearing 7 for a corresponding end of the shaft 5.

Each of the two parts 1, 2 also comprises a half-face 1b and 2b respectively, in which a half-seat 8a and 8b respectively is formed for housing a bearing 9 for one end of the shaft 3. These half-seats 8a, 8b are through seats, to enable the end 3a of the shaft 3 to emerge, to which end the output shaft 10 of the motor M is connected in known manner.

On the opposite side to the half-faces 1b and 2b, the half-faces 1c and 2c also comprise half-seats 11a and 11b, for housing the bearing 12 at the other end of the shaft 3.

Preferably, the bearings 9 and 12 are force-fitted into metal support plates - of which only the plate 9a of the bearing 9 is visible - of square or generally polygonal profile. This method of assembly makes the outer shell of the bearing perfectly rigid with the part 1 or 2 of the box, without any possibility of rotation in the seats 8a-8b or 11a-11b.

The gearbox heretofore described is extremely simple to assemble.

One end of the shaft 5 is inserted into the bearing 7, for example of the part 1, and the bearings 9 and 12 of the shaft 3 are inserted into the seats 8a and 11a respectively, of the same box part 1. In carrying out this operation, care must be taken to correctly engage the teeth of the worm 4 with the teeth of the gearwheel 6, and this can be done very easily and quickly, as the box part 1 is completely open.

The box part 2 is then closed on to the part 1, firstly fitting the bearing 7 over the end of the shaft 5 and then the seats 8b and 11b over that part of the bearings 9 and 12 which projects from the seats 8a, 11a. Finally, the parts 1 and 2 are

- 4 -

0177001

fixed together - possibly with the interposition of a normal sealing gasket (not shown) - by simple draw bolts 13.

Preferably, according to an additional feature of the present invention, half-flanges 14a and 14b, for connection to the flange 15 of the motor M, are fixedly connected to the faces 1a and 2a which carry the seats for the input end of the shaft 3. The half-flanges 14a and 14b can be easily produced by casting together with the parts 1 and 2 respectively.

The gearbox structure according to the present invention can be constructed by aluminium casting in known manner. However it is well suited for construction by plastics injection-moulding, with obvious savings both in terms of material and in terms of casting procedures.

## CLAIMS

1) A gearbox for a geared motor unit, of the type comprising a worm and gearwheel, the worm being fixed to the input shaft and the gearwheel being fixed to the output shaft, this latter being disposed perpendicular to the input shaft, characterised in that said box is constructed in only two parts separable along a separation plane passing through the axis of one of said shafts and perpendicular to the axis of the other shaft, and in that the two opposing faces of said parts which are parallel to said separation plane incorporate seats for housing the rolling bearings of the second shaft, whereas two further opposing faces perpendicular to the separation plane comprise seats for housing the bearings of the first shaft and opening along the separation line.

2) A gearbox as in claim 1), wherein said box parts are formed by casting or moulding, each in a single piece.

3) A gearbox as in claim 1), wherein the rolling bearings for the ends of said shafts are force-fitted into support plates of polygonal and preferably square outer profile, said plates being mounted, without the possibility of rotation, into the respective seats in said box parts.

4) A gearbox as in claim 3), wherein at least part of said rolling bearing support plates are mounted in said box parts as casting inserts.

5) A gearbox as in claim 1), wherein a connection flange for the drive motor is fixed to at least one of said box parts.

6) A gearbox as in claim 5), wherein said connection flange is formed in one piece with the respective box part.

7) A gearbox as in claim 6), wherein said connection flange is constructed in two parts, each of which is formed in one piece with a respective box part.

8) A gearbox as in claim 1), wherein said box parts are

0177001

produced by injection-moulding of plastic material.